**Europäisches Patentamt**

**European Patent Office**

**Office européen des brevets**

(19)

(11) Veröffentlichungsnummer: **0 057 004**
B1

(12) # EUROPÄISCHE PATENTSCHRIFT

(45) Veröffentlichungstag der Patentschrift:
**27.11.85**

(21) Anmeldenummer: **82100489.2**

(22) Anmeldetag: **25.01.82**

(51) Int. Cl.⁴: **G 01 F 1/22**, G 01 F 1/24

(54) **Strömungsmesseinrichtung.**

(30) Priorität: **26.01.81 US 228437**

(43) Veröffentlichungstag der Anmeldung:
**04.08.82 Patentblatt 82/31**

(45) Bekanntmachung des Hinweises auf die Patenterteilung:
**27.11.85 Patentblatt 85/48**

(84) Benannte Vertragsstaaten:
**AT DE FR GB IT NL SE**

(56) Entgegenhaltungen:
**DE - B - 2 100 289**
**US - A - 2 574 866**
**US - A - 3 528 288**

(73) Patentinhaber: **DEERE & COMPANY, 1 John Deere Road, Moline Illinois 61265 (US)**

(72) Erfinder: **Nelson, Roger John, 3815 Clearview Drive, Cedar Falls Iowa 50613 (US)**

(74) Vertreter: *Gramm, Werner, Prof. Dipl.-Ing.,*
**Patentanwälte Gramm + Lins Theodor-Heuss-Strasse 2, D-3300 Braunschweig (DE)**

**Beschreibung**

Die Erfindung betrifft eine Zweirichtungs-Strömungsmesseinrichtung, bestehend aus

– einem nicht-magnetischen Gehäuse, das einen Strömungskanal für eine Zweirichtungsströmung umschliesst;
– einem ersten Drosselkörper, der im Strömungskanal angeordnet ist und mit einem im Abstand von ihm angeordneten zweiten Drosselkörper einen veränderbaren Drosselquerschnitt bildet, wobei einer der beiden Drosselkörper gegenüber dem anderen dieser beiden Drosselkörper so verschiebbar ist, dass er bei nicht vorhandener Strömung seine Neutralstellung einnimmt, unter der Wirkung einer Strömung aber aus dieser Neutralstellung in Strömungsrichtung um ein Mass verschoben wird, das die jeweilige Durchflussmenge angibt, und wobei einer der beiden Drosselkörper hülsenförmig ausgebildet ist und den anderen Drosselkörper umschliesst;
– zwei federelastischen Gliedern, die an gegenüberliegenden Enden des verschiebbaren Drosselkörpers angreifen und diesen in seine Neutralstellung drücken;
– einer das Gehäuse koaxial umschliessenden Messeinrichtung in Form eines induktiv arbeitenden Verschiebungswandlers zur Erzeugung eines Ausgangssignals, das die jeweilige Stellung des verschiebbaren Drosselkörpers angibt.

Eine derartige Ausführungsform lässt sich z.B. den Patentschriften US-A 3 528 288 und US-A 3 623 046 entnehmen. Im Bereich der beiden Enden des Strömungskanals sind voneinander weg gerichtete Gehäuseschultern vorgesehen, gegen die jeweils ein scheibenförmig ausgebildetes Lager anliegt, das Durchströmöffnungen aufweist und zur Halterung einer zentrisch im Strömungskanal liegenden Stange dient. Auf dieser ist der erste Drosselkörper verschiebbar gelagert, an dessen sich gegenüberliegenden Enden jeweils eine Zentrierfeder angreift, die die genannte Stange koaxial umschliesst und sich mit ihrem anderen Ende an dem zugeordneten scheibenförmigen Lager abstützt. Dieser verschiebbare erste Drosselkörper wirkt mit einem stationären zweiten Drosselkörper zusammen, der durch die Wandung des Strömungskanals gebildet wird und aus einer ringförmigen Blende besteht, deren Querschnitt die Form eines flachen gleichschenkligen Dreiecks aufweist. Der verschiebbare erste Drosselkörper ist in seinem mittleren Abschnitt schneidenförmig ausgebildet, wobei die Schneide in der Neutralstellung des Drosselkörpers der Dreiecksspitze der genannten Ringblende des zweiten Drosselkörpers gegenüberliegt.

Das Gehäuse dieser vorbekannten Strömungsmesseinrichtung weist einen äusseren Mantel aus magnetischem Material auf, der einen inneren Gehäusemantel aus nicht-magnetischem Material umschliesst. In letzterem sind Spulen eingebettet, die Teil der vorstehend erwähnten Messeinrichtung zur Erzeugung eines Ausgangssignals sind. Die jeweils symmetrische Form der beiden Drosselkörper kann so ausgebildet sein, dass sich lineare Ausgangswerte ergeben.

Es ist üblich geworden, Hydraulikkreise elektronisch zu steuern, wobei es oft wünschenswert ist, die Hydraulikdurchflussmenge durch einen bestimmten Abschnitt des Hydraulikkreises festzustellen. Hierfür lässt sich die vorstehend erläuterte Strömungsmesseinrichtung verwenden, die ein elektrisches Signal erzeugt, das den Strömungsfluss darstellt und einen linearen Zusammenhang mit der jeweiligen Durchflussmenge aufweist. Mit dieser Strömungsmesseinrichtung lässt sich die Hydraulikströmung in beiden Richtungen mit verhältnismässig geringem Aufwand messen.

Der Erfindung liegt die Aufgabe zugrunde, die Ansprechempfindlichkeit der eingangs erläuterten Strömungsmesseinrichtung zu verbessern.

Diese Aufgabe wird gemäss der Erfindung dadurch gelöst, dass der verschiebbare Drosselkörper hülsenförmig ausgebildet ist, den stationären ersten Drosselkörper umschliesst und aus magnetisch leitfähigem Material besteht, und dass auf dem stationären Drosselkörper zwei Widerlager angeordnet sind, die jeweils das eine der beiden federelastischen Glieder dann von dem verschiebbaren Drosselkörper abkuppeln, wenn dieser aus seiner Neutralstellung in Richtung auf das andere der beiden federelastischen Glieder verschoben wird.

Während bei der eingangs beschriebenen, vorbekannten Strömungsmesseinrichtung der verschiebbare Drosselkörper ständig unter der Wirkung beider Druckfedern steht, die zur Kompensation der entsprechenden Verschiebungswege eine ausreichende Vorspannung benötigen, wird bei der erfindungsgemässen Einrichtung erreicht, dass bei einer Veschiebung des hülsenförmigen Drosselkörpers in die eine oder andere Richtung immer nur eine der beiden Federn eine Kraft auf den Drosselkörper ausübt.

Der verschiebbare Drosselkörper bildet einen hülsenförmigen Kern, der von der Messeinrichtung lediglich durch die Gehäusewandung getrennt ist, so dass sich ein hoher magnetischer Fluss zwischen dem verschiebbaren Kern und der genannten Messeinrichtung ergibt. Hierdurch sowie durch die Ausbildung des verschiebbaren Drosselkörpers als Hülse ergeben sich verbesserte Effizienz und höhere Ansprechempfindlichkeit.

Neugestaltungen der Erfindung sind Gegenstand der abhängigen Ansprüche und werden nachfolgend zusammen mit weiteren Vorteilen der Erfindung anhand eines Ausführungsbeispiels näher erläutert.

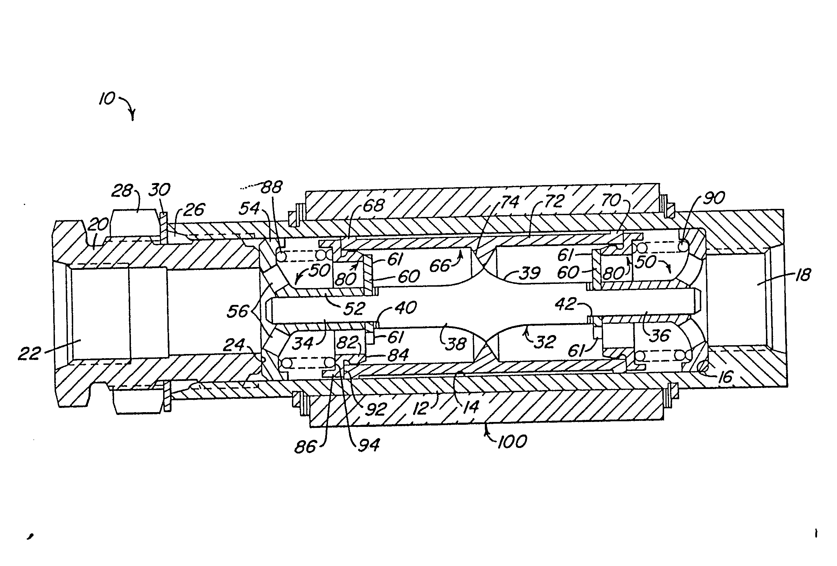

In der Zeichnung ist eine als Beispiel dienende Ausführungsform der Erfindung im Längsschnitt dargestellt. Die dargestellte Zweirichtungs-Strömungsmesseinrichtung 10 besteht aus einem Gehäuse 12 aus nicht-magnetischem Material, z.B. aus unmagnetischem korrosionsbeständigem Stahl. Das Gehäuse 12 weist eine abgesetzte Bohrung 14 auf, die eine Gehäuseschulter 16 sowie einen Durchlass 18 bildet. In das andere Ende des Gehäuses 12 ist ein Endverbundstück 20 eingeschraubt, das einen Durchlass 22 und eine zweite Gehäuseschulter 24 aufweist. Zwischen Endverbundstück 20 und Gehäuse 12 sind als Flüssigkeitsdichtung ein O-Ring 26, eine Klemmmutter 28 sowie eine Scheibe 30 vorgesehen. Zwischen den Durchlässen 18, 22 kann die Flüssigkeitsströmung in beiden Richtungen durch die Bohrung 14 fliessen.

In der Bohrung 14 ist zentrisch und koaxial ein stangenförmiger, axial symmetrisch ausgebildeter Drosselkörper 32 angeordnet, der zwei Endteile 34, 36 kleineren Durchmessers aufweist, die über Schultern 40, 42 in einen Mittelteil grösseren, jedoch nicht gleichbleibenden Durchmessers übergehen. Dieser Mittelteil 38 weist eine nach aussen ragende Schneide 39 auf, die sich langsam und symmetrisch gleichmässig von einem grössten Durchmesser in ihrer Mitte zu einem gleichbleibenden Durchmesserabschnitt neben den genannten Schultern 40, 42 verbreitert.

Die Endteile 34, 36 des stangenförmigen Drosselkörpers 32 sind in zwei identisch ausgebildeten Lagern 50 gehalten und ragen hier in die Bohrung eines zylindrischen Zentralabschnitts 52, der in einen Flansch 54 übergeht, der einerseits an der Innenwandung der Bohrung 14 sowie an der zugeordneten Gehäuseschulter 24 bzw. 16 anliegt. Jeder Flansch 54 weist einen konischen Abschnitt auf, durch den sich sechs im gleichen Abstand voneinander angeordnete Durchströmöffnungen 56 erstrecken, deren Mittelachsen mit der Längsachse des stangenförmigen Drosselkörpers 32 einen Winkel von 30° einschliessen (in der Zeichnung sind von den jeweils sechs Durchströmöffnungen 56 nur jeweils zwei Öffnungen dargestellt).

Auf den Endteilen 34, 36 des stangenförmigen Drosselkörpers 32 ist zwischen dem zentrischen Abschnitt 52 des Lagers 50 sowie der Schulter 40 bzw. 42 des Drosselkörpers 32 jeweils ein mit Durchbrechungen versehenes Widerlager 60 angeordnet, das drei sich radial erstreckende Arme 61 aufweist, von denen zwei in der dargestellten Zeichnung erkennbar sind. Zwischen den Widerlagern 60 und den Schultern 40, 42 sind Zwischenringe vorgesehen, so dass der stangenförmige Drosselkörper 32, die Widerlager 60 sowie die Lager 50 in axialer Richtung fest zwischen den Gehäuseschultern 24, 16 angeordnet sind.

In der Bohrung 14 ist ein den stationären Drosselkörper 32 mit Abstand koaxial umschliessender Drosselkörper 66 in Form einer axial symmetrischen Hülse aus magnetischem Material verschiebbar gelagert. Dieser verschiebbare Drosselkörper 66 bildet in elektromagnetischer Hinsicht einen Kern, der Endflansche 68, 70 grösseren Durchmessers sowie einen zylindrischen Mittelteil 72 kleineren Durchmessers aufweist und mit den äusseren Mantelflächen der Endflansche 68, 70 an der die Bohrung 14 bildenden Wandung verschiebbar geführt ist. Vom Mittelteil 72 ragt eine ringförmige Blende 74 vom dreiecksförmigen Querschnitt radial nach innen und bildet mit der Schneide 39 des stationären Drosselkörpers 32 einen veränderbaren Drosselquerschnitt, und zwar je nach axialer Verschiebestellung des hülsenförmigen Drosselkörpers 66 relativ gegenüber dem stangenförmigen Drosselkörper 32. Befindet sich der den Kern bildende verschiebbare Drosselkörper 66 in seiner in der Zeichnung dargestellten Neutralstellung, besteht zwischen der ringförmigen Blende 74 und der Schneide 39 ein schmaler Ringspalt. Blende 74 und Schneide 39 sind so geformt, dass sich eine lineare Verschiebung des Drosselkörpers 66 als Funktion der Durchflussmenge ergibt.

Die Strömungsmesseinrichtung 10 umfasst ferner zwei identisch ausgebildete zylindrische Führungsstücke 80, von denen jedes einen zylindrischen Abschnitt 82 kleineren Durchmessers aufweist, der in das Ende des verschiebbaren hülsenförmigen Drosselkörpers 66 gleitend eingreift, während eine Schulter 84 bzw. eine ringförmige Stirnfläche des zylindrischen Führungsstücks an den Armen 61 des zugeordneten Widerlagers 60 anliegt. Jedes Führungsstück 80 umfasst ferner einen zylindrischen Abschnitt 86 grösseren Durchmessers, der das eine Ende einer zugeordneten Zentrierfeder 88 bzw. 90 übergreift, die sich an einer ringförmigen Schulter 94 des Führungsstücks 80 abstützt. Letzteres liegt mit einer Ringschulter 92 an dem benachbarten Ende des verschiebbaren Drosselkörpers 66 an. Die Zentrierfedern 88, 90 stützen sich mit ihren anderen Enden an dem jeweils zugeordneten Lager 50 ab und drücken den verschiebbaren Drosselkörper 66 über die Führungsstücke 80 in seine in der Zeichnung dargestellte Neutralstellung gegenüber dem stationären Drosselkörper 32 bzw. dem Gehäuse 12, wenn durch die Bohrung 14 keine Strömung fliesst. Beide Zentrierfedern 88, 90 sind leicht vorgespannt, wenn sich der verschiebbare Drosselkörper 66 in seiner Neutralstellung befindet, so dass die Zentrierung des verschiebbaren Drosselkörpers 66 trotz bestehender Reibungsverluste sichergestellt ist.

Die jeweilige axiale Verschiebungsstellung des Drosselkörpers 66 lässt sich durch einen üblichen linear veränderlichen Differentialtransformator (LVDT) feststellen, der eine zylindrische LVDT-Spulenanordnung 100 aufweisen kann, wie sie z.B. hergestellt wird von Schaevitz Engineering, Camden, New Jersey, und die koaxial auf die äussere Mantelfläche des nicht-magnetischen Gehäuses 12 montiert sein kann. An die Spulenanordnung 100 kann eine übliche elektrische Schaltung angeschlossen sein (wie sie z.B. beschrieben ist auf den Seiten 17–55 und 17–56 in D.G. Fink's Electronics Engineers Handbook, McGraw-Hill, 1975), um ein elektrisches Ausgangssignal zu erzeugen, das die axiale Verschiebestellung des Drosselkörpers 66 relativ gegenüber der Spulenanordnung 100 angibt.

Die Arbeitsweise der Strömungsmesseinrichtung ist wie folgt: Fliesst keine Flüssigkeit durch die Bohrung 14, halten die Zentrierfedern 88, 90 den verschiebbaren Drosselkörper 66 in seiner Neutralstellung. Fliesst hingegen Flüssigkeit durch die Bohrung 14, so wird der Drosselkörper 66 durch diesen Flüssigkeitsstrom aus seiner Neutralstellung in Richtung der Flüssigkeitsströmung verschoben, und zwar um einen Betrag, der der Durchströmmenge proportional ist. Strömt bei dem dargestellten Ausführungsbeispiel die Flüssigkeit z.B. nach rechts, wird der Drosselkörper 66 nach rechts verschoben und drückt dabei die Zentrierfeder 90 so weit zusammen, bis die durch die strömende Flüssigkeit ausgeübten Kräfte mit der zunehmenden Kraft der Feder 90 im Gleichgewicht stehen. Bewegt sich der Drosselkörper 66 aus einer Neutralstellung nach rechts, legt sich die ringförmige Stirnfläche 84 des in der Zeichnung links liegenden Führungsstücks 80 gegen das benachbarte Widerlager 60 an und verhindert dadurch, dass sich das linke Führungsstück 80 zusammen mit dem verschiebbaren Drosselkörper 66 nach rechts bewegt. Hierdurch wird die Zentrierfeder 88 von dem Drosselkörper 66 abgekoppelt, so dass letzterer bei seiner Verschiebung nach links oder rechts aus seiner Neutralstellung heraus immer nur von einer der Zentrierfedern 88 oder 90 beaufschlagt wird.

Die Spulenanordnung 100 sowie die nicht dargestellte LVDT-Schaltung arbeiten in herkömmlicher Weise und erzeugen Ausgangssignale, die Richtung und Grösse der Verschiebung des Drosselkörpers 66 und damit Richtung und Grösse des Strömungsflusses durch die Bohrung 14 darstellen.

**Patentansprüche**

1. Zweirichtungs-Strömungsmesseinrichtung (10), bestehend aus

- einem nicht-magnetischen Gehäuse (12, 20), das einen Strömungskanal (18, 14, 22) für eine Zweirichtungsströmung umschliesst;
- einem ersten Drosselkörper (32), der im Strömungskanal (18, 14, 22) angeordnet ist und mit einem im Abstand von ihm angeordneten zweiten Drosselkörper (66) einen veränderbaren Drosselquerschnitt bildet, wobei einer der beiden Drosselkörper (32, 66) gegenüber dem anderen dieser beiden Drosselkörper so verschiebbar ist, dass er bei nicht vorhandener Strömung seine Neutralstellung einnimmt, unter der Wirkung einer Strömung aber aus dieser Neutralstellung in Strömungsrichtung um ein Mass verschoben wird, das die jeweilige Durchflussmenge angibt, und wobei einer der beiden Drosselkörper hülsenförmig ausgebildet ist und den anderen Drosselkörper umschliesst;
- zwei federelastischen Gliedern (88, 90), die an gegenüberliegenden Enden des verschiebbaren Drosselkörpers (66) angreifen und diesen in seine Neutralstellung drücken;
- einer das Gehäuse (12) koaxial umschliessenden Messeinrichtung (100) in Form eines induktiv arbeitenden Verschiebungswandlers zur Erzeugung eines Ausgangssignals, das die jeweilige Stellung des verschiebbaren Drosselkörpers (66) angibt; dadurch gekennzeichnet, dass der verschiebbare Drosselkörper (66) hülsenförmig ausgebildet ist, den stationären ersten Drosselkörper (32) umschliesst und aus magnetisch leitfähigem Material besteht, und dass auf dem stationären Drosselkörper (32) zwei Widerlager (60) angeordnet sind, die jeweils das eine der beiden federelastischen Glieder (88, 90) dann von dem verschiebbaren Drosselkörper (66) abkuppeln, wenn dieser aus seiner Neutralstellung in Richtung auf das andere der beiden federelastischen Glieder verschoben wird.

2. Strömungsmesseinrichtung nach Anspruch 1, dadurch gekennzeichnet, dass der verschiebbare Drosselkörper (66) einen Abschnitt (72) kleineren Durchmessers sowie zwei Ringabschnitte (68, 70) grösseren Durchmessers aufweist, wobei letztere mit ihrer äusseren Mantelfläche im Gehäuse (12) gleitend geführt sind.

3. Strömungsmesseinrichtung nach einem der vorhergehenden Ansprüche, dadurch gekennzeichnet, dass der verschiebbare Drosselkörper (66) den stationären, zentrisch im Strömungskanal festgelegten und stangenförmig ausgebildeten Drosselkörper (32) koaxial umschliesst.

4. Strömungsmesseinrichtung nach Anspruch 3, dadurch gekennzeichnet, dass der stationäre Drosselkörper (32) einen mittleren Abschnitt (38) grösseren Durchmessers aufweist, der an seinen Enden über je eine Ringschulter (40, 42) in Abschnitte (34, 36) kleineren Durchmessers übergeht, auf denen die Widerlager (60) angeordnet sind, die sich gegen die Ringschulter (40, 42) abstützen.

5. Strömungsmesseinrichtung nach einem der vorhergehenden Ansprüche, dadurch gekennzeichnet, dass der stationäre Drosselkörper (32) mit jedem seiner Enden in eine zentrische Bohrung eines im Strömungskanal (14) angeordneten Lagerpaares (50) ragt, wobei jedes Lager einen sich im wesentlichen radial erstreckenden Flansch (54) aufweist, der am Gehäuse (12, 20) anliegt und Durchströmöffnungen (56) aufweist.

6. Strömungsmesseinrichtung nach Anspruch 5, dadurch gekennzeichnet, dass der Flansch (54) jedes Lagers (50) einen konischen Abschnitt aufweist, in dem die Durchströmöffnungen (56) angeordnet sind.

7. Strömungsmesseinrichtung nach Anspruch 5 oder 6, dadurch gekennzeichnet, dass die Mittelachsen der Durchströmöffnungen (56) mit der Längsachse des stationären Drosselkörpers (32) einen spitzen Winkel einschliessen.

8. Strömungsmesseinrichtung nach Anspruch 5, 6 oder 7, dadurch gekennzeichnet, dass jedes Lager (50) mit seinem zylindrischen Mittelteil (52) das zugeordnete Widerlager (60) gegen die Schulter (40, 42) des stationären Drosselkörpers (32) drückt.

9. Strömungsmesseinrichtung nach einem der Ansprüche 2 bis 8, dadurch gekennzeichnet, dass jedes federelastische Glied eine den Endabschnitt (34, 36) des stationären Drosselkörpers (32) koaxial übergreifende Zentrierfeder (88, 90) sowie ein zylindrisches Führungsstück (80) aufweist, das eine erste Schulter (94) zur Abstützung der Zentrierfeder (88, 90), eine zweite Schulter (92) zur Anlage an den verschiebbaren Drosselkörper (66) und eine dritte Schulter (84) zur Anlage an dem zugeordneten Widerlager (60) aufweist.

10. Strömungsmesseinrichtung nach Anspruch 9, dadurch gekennzeichnet, dass die beiden zylindrischen Führungsstücke (80) mit jeweils einem zylindrischen Abschnitt (82) kleineren Durchmessers in die Enden des verschiebbaren hülsenförmigen Drosselkörpers (66) gleitend eingreifen.

11. Strömungsmesseinrichtung nach einem der vorhergehenden Ansprüche, dadurch gekennzeichnet, dass das Gehäuse (12, 20) mit einer Wandung eine Bohrung (14) umschliesst, die den Strömungskanal bildet, im Bereich von dessen Enden das Gehäuse gegeneinander gerichtete Gehäuseschultern (16, 24) aufweist, gegen die die Lager (50) mit ihrem Flansch (54) anliegen, wobei die Widerlager (60) und die Lager (50) so mit dem Gehäuse (12, 20), den Gehäuseschultern (16, 24) und den Ringschultern (40, 42) des stationären Drosselkörpers (32) zusammenwirken, dass letzterer zentrisch in der genannten Bohrung (14) und fest gegenüber dem Gehäuse gehalten ist.

**Claims**

1. A bi-directional flow measuring device (10) comprising:

– a non-magnetic housing (12, 20) surrounding a flow passage (18, 14, 22) for a bi-directional flow;
– a first throttle member (32) arranged in the flow passage (18, 14, 22) and a second throttle member (66) spaced apart from said first throttle member to form a variable throttle cross-section, one of both throttle members (32, 66) being movable relative to the other throttle member in such a way that it takes its neutral position in the absence of flow; in response to fluid flow, however, said throttle member is displaced from said neutral position in the direction of fluid flow by an amount indicating the respective rate of fluid flow, and whereby one of both throttle members has the shape of a cylindrical sleeve and surrounds the other throttle member;
– two resilient members (88, 90) acting upon opposite ends of the movable throttle member (66) and urging said throttle member (66) to its neutral position;
– sensing means (100) for generating an output signal indicating the respective position of the movable throttle member (66), said sensing means surrounding coaxially the housing (12) and being in the form of an inductively working displacement transducer; characterized in that the movable throttle member (66) has the shape of a cylindrical sleeve surrounding the fixed first throttle member (32) and is of magnetic conductive material, and that two abutment members (60) are arranged on the fixed throttle member (32) and then uncouple the respective resilient member (88,90) from the movable throttle member (66) when the movable throttle member is displaced from its neutral position towards the other resilient member.

2. The flow measuring device according to claim 1, wherein said movable throttle member (66) has a portion (72) of a smaller diameter and further has two ring portions (68, 70) of a larger diameter, the outer peripheral surface of the larger outer diameter ring portions slidably engaging the housing (12).

3. The flow measuring device according to one of the preceding claims, wherein the movable throttle member (66) coaxially surrounds said fixed throttle member (32) mounted centrally in the flow passage and having the shape of a rod.

4. The flow measuring device according to claim 3, wherein the fixed throttle member (32) comprises a middle portion (38) having a larger diameter and being interconnected on its end portions with smaller diameter portions (34, 36) by a pair of annular shoulders (40, 42), the abutment members (60) being supported by said smaller diameter portions and engaging the annular shoulders (40, 42).

5. The flow measuring device according to one of the preceding claims, wherein each end portion of said fixed throttle member (32) projects in a central bore of a pair of support members (50) in the flow passage (14), whereby each support member has a generally radially extending flange (54) engaging the housing (12, 20) and having apertures (56) for permitting fluid flow therethrough.

6. The flow measuring device according to claim 5, wherein said flange (54) of each support member (50) comprises a conical portion, the apertures (56) for fluid flow being arranged in said conical portion.

7. The flow measuring device according to claim 5 or 6, wherein the middle axes of said apertures (56) form an acute angle with the longitudinal axis of the fixed throttle member (32).

8. The flow measuring device according to claim 5, 6 or 7, wherein the cylindrical middle portion (52) of each support member (50) urges the corresponding abutment member (60) against the shoulder (40, 42) of said fixed throttle member (32).

9. The flow measuring device according to one of the claims 2 to 8, wherein each resilient member comprises a centering spring (88, 90) coaxially surrounding the end portion (34, 36) of the fixed throttle member (32), and further comprises a cylindrical guide member (80) having a first shoulder (94) supporting the centering spring (88, 90), a second shoulder (92) engageable with the movable throttle member (66) and a third shoulder (84) engageable with the corresponding abutment member (60).

10. The flow measuring device according to claim 9, wherein each of the two cylindrical guide members (80) has a smaller diameter cylindrical portion (82) slidably engaging the ends of the movable cylindrical throttle member (66).

11. The flow measuring device according to one of the preceding claims, wherein said housing (12, 20) surrounds with a wall a bore (14) forming the flow passage, the housing having oppositely facing housing shoulders (16, 24) located in the area of the ends of the flow passage, the flange (54) of each support member (50) engaging a corresponding one of said housing shoulders, whereby the abutment members (60) and the support members (50) cooperate in such a way with the housing (12, 20), the housing shoulders (16, 24) and the annular shoulders (40, 42) of the fixed throttle member (32) that the fixed throttle member is held in a central position in said bore (14) and fixed with respect to the housing.

## Revendications

1. Débitmètre bidirectionnel (10) comportant:

– un carter non-magnétique (12, 20) ménageant un canal d'écoulement (18, 14, 22) permettant un écoulement bi-directionnel;
– un premier élément d'étranglement (32) disposé dans le canal d'écoulement (18, 14, 22) et délimitant en combinaison avec un second élément d'étranglement (66) écarté du premier élément une section d'étranglement variable, l'un de ces deux éléments d'étranglement (32, 66) étant déplaçable par rapport à l'autre élément d'étranglement de telle sorte qu'il prenne sa position neutre lorsqu'aucun écoulement ne se produit, mais qu'il soit déplacé sous l'effet d'un écoulement à partir de sa position neutre, dans la direction de l'écoulement, à un degré qui indique chaque fois le débit momentané, l'un des deux éléments d'étranglement ayant une forme de douille et entourant l'autre élément d'étranglement;
– deux organes élastiques (88, 90) attaquant l'élément d'étranglement déplaçable (66) à ses extrémités opposées et le repoussant dans sa position neutre;
– un dispositif de mesure (100) entourant coaxialement le carter (12) et se présentant sous la forme d'un transducteur de déplacement à fonctionnement inductif pour engendrer un signal de sortie qui indique la position momentanée de l'élément d'étranglement déplaçable (66); caractérisé en ce que l'élément d'étranglement déplaçable (66) a une forme de douille, entoure le premier élément d'étranglement fixe (32) et est constitué par une matière magnétiquement conductrice, et en ce qu'il est prévu sur l'élément d'étranglement fixe (32) deux portées qui écartent chaque fois l'un des deux organes élastiques (88, 90) de l'élément d'étranglement déplaçable (66) quand celui-ci est déplacé à partir de sa position neutre vers l'autre organe élastique.

2. Débitmètre suivant la revendication 1, caractérisé en ce que l'élément d'étranglement déplaçable (66) comporte une partie (72) de plus petit diamètre ainsi que deux parties annulaires (68, 70) de plus grand diamètre, ces dernières étant guidées de façon coulissante dans le carter (12) par leur périphérie extérieure.

3. Débitmètre suivant l'une quelconque des revendications précédentes, caractérisé en ce que l'élément d'étranglement déplaçable (66) entoure coaxialement l'élément d'étranglement fixe (32), qui a une forme de tige ou barreau et qui est immobilisé en position centrée dans le canal d'écoulement.

4. Débitmètre suivant la revendication 3, caractérisé en ce que l'élément d'étranglement fixe (32) présente un partie centrale (38) de plus grand diamètre, qui se prolonge à ses extrémités, chaque fois par l'intermédiaire d'un épaulement annulaire (40, 42), par des parties de plus petit diamètre (34, 36) sur lesquelles les portées (60) sont prévues, ces portées prenant appui sur les épaulements annulaires (40, 42).

5. Débitmètre suivant l'une quelconque des revendications précédentes, caractérisé en ce que l'élément d'étranglement fixe (32) fait saillie par chacune de ses extrémités dans un alésage central d'une paire de paliers (50) disposés dans le canal d'écoulement (14), chaque palier présentant une bride (54) s'étendant en principe radialement qui s'applique contre le carter (12, 20) et qui présente des orifices d'écoulement (56).

6. Débitmètre suivant la revendication 5, caractérisé en ce que la bride (54) de chaque palier (50) présente une partie conique dans laquelle les orifices d'écoulement (56) sont ménagés.

7. Débitmètre suivant la revendication 5 ou 6, caractérisé en ce que les axes médians des orifices d'écoulement (56) forment un angle aigu avec l'axe longitudinal de l'élément d'étranglement fixe (32).

8. Débitmètre suivant la revendication 5, 6 ou 7, caractérisé en ce que chaque palier (50) repousse par sa partie médiane cylindrique (52) la portée conjuguée (60) contre l'épaulement (40, 42) de l'élément d'étranglement fixe (32).

9. Débitmètre suivant l'une quelconque des revendications 2 à 8, caractérisé en ce que chaque organe élastique comprend un ressort de centrage (88, 90) chevauchant coaxialement la partie terminale (34, 36) de l'élément d'étranglement fixe (32), ainsi qu'une pièce de guidage cylindrique (80) qui comporte un premier épaulement (94) servant d'appui au ressort de centrage (88, 90), un second épaulement (92) d'application sur l'élément d'étranglement déplaçable (66) et un troisième épaulement (84) d'application contre la portée conjuguée (60).

10. Débitmètre suivant la revendication 9, caractérisé en ce que les deux pièces de guidage cylindriques (680) s'engagent à coulissement dans les extrémités de l'élément d'étranglement déplaçable en forme de douille (66) chaque fois par une partie cylindrique (82) de plus petit diamètre.

11. Débitmètre suivant l'une quelconque des revendications précédentes, caractérisé en ce que le carter (12, 20) entoure par une paroi un alésage (14) qui forme le canal d'écoulement, ce carter présentant, au voisinage des extrémités de cet alésage, des épaulements (16, 24) orientés l'un vers l'autre, contre lesquels les paliers (50) s'appuient par leur bride (54), les portées (60) et les paliers (50) coopérant ainsi avec le carter (12, 20) les épaulements (16, 24) de ce carter et les épaulements annulaires (40, 42) de l'élément d'étranglement fixe (32) de telle sorte que ce dernier soit maintenu dans une position centrée dans l'alésage précité (14) et soit immobilisé par rapport au carter.